# EUROPEAN PATENT APPLICATION

(11) **EP 4 725 878 A1**
(43) Date of publication of application: **15.04.2026**
(21) Application number: 24205526.7
(22) Date of filing: 09.10.2024
(51) Int. Cl.: B65H 18/26, H01M 4/04

(54) **APPARATUS AND METHOD FOR WINDING AND CALENDERING AN ELECTRODE STACK**

(71) Applicant: Technische Universität München, in Vertretung des Freistaats Bayern, 80333 München (DE); TUMint-Energy Research GmbH, 85748 Garching (DE)
(72) Inventor: Wach, Lovis, 80339 München (DE); Kutsch, Tobias, 81539 München (DE); Schuster, Robin, 81377 München (DE); Sinzig, Stephan, 85716 Unterschleißheim (DE); Konwitschny, Fabian, 80992 München (DE); Schmidt, Christoph, 80805 München (DE); Daub, Rüdiger, 82194 Gröbenzell (DE); Gasteiger, Hubert, 80469 München (DE); Wall, Wolfgang A., 85386 Eching (DE)
(74) Representative: Lucke, Andreas

(57) **Abstract**

An apparatus for winding an electrode stack on a roll and calendering the electrode stack using said roll. The apparatus comprises said roll. Said roll is adapted to rotate around an axis of rotation. The winding of the electrode stack on said roll is associated with the rotating of said roll. The apparatus comprises a plurality of calender rolls arranged around said roll. The apparatus comprises a plurality of calenders, each of said calenders formed by said roll and a different one of the calender rolls from the plurality of calender rolls.

## Description

### FIELD OF THE DISCLOSURE

The present disclosure relates to an apparatus and a method for fabricating jelly-roll batteries. Specifically, the present disclosure relates to an apparatus for winding an electrode stack on a roll and calendering the electrode stack using the same roll and calender rolls arranged symmetrically around, as well as a method for performing these operations, preferably concurrently.

### BACKGROUND

Solid-state batteries, which are regarded as one of the energy storage technology of the future, replace the liquid electrolyte used in conventional batteries with a solid-state electrolyte in order to achieve higher performance, a longer service life and improved safety.

Lithium-ion batteries exist in various formats. The most widely used cell shape is the cylindrical cell with a wound cell body, which is also referred to as a jelly-roll battery in the context of this disclosure. To produce a jelly-roll battery, an electrode stack is compacted and wound onto a mandrel and fixed in a housing. The compaction is usually performed in a calendering process between two opposing calender rolls, between which the electrode stack to be calendered is guided and compacted.

Although some progress has been made regarding the production of batteries using respective techniques, improvements are desirable to ensure a sufficient compaction of the electrode stack at high-throughput conditions, and to reduce waste due to mechanical breakage, shunts, or delamination of the electrode stack, or of the jelly-roll battery comprising the electrode stack, respectively.

### SUMMARY OF THE DISCLOSURE

It is an object of this invention to provide an apparatus that overcomes one or more of the disadvantages of known systems.

According to a first aspect, an apparatus for winding an electrode stack on a roll and calendering the electrode stack using said roll comprises said roll. Said roll is adapted to rotate around an axis of rotation. The winding of the electrode stack on said roll is associated with said rotating of said roll. The apparatus comprises a plurality of calender rolls arranged around said roll. The apparatus comprises a plurality of calenders, each of said calenders formed by said roll and a different one of the calender rolls from the plurality of calender rolls.

The apparatus, and more specifically its calenders, thus serve to compact the electrode stack while it is being wound, and more specifically, while it already has a non-zero curvature.

Compacting the electrode stack is an essential process step in the production of some battery-types such as solid-state batteries. The compaction reduces the porosity of the electrode stack, such that the porosity is controlled according to a pre-selected, optimum value for the respective battery. The method according to this description provides a sufficient compaction.

The compaction also produces a mechanical connection, also referred to as lamination, of the components of the electrode stack. The compacted electrode stack may therefore also be referred to as a laminate, or as a laminated electrode stack, respectively.

Conventionally, to produce a jelly-roll battery, an electrode stack is first compacted by calendering, and thereafter wound on a mandrel. As the electrode stack passes with a minor or vanishing curvature through the calender of a conventional apparatus, the curvature of the electrode stack needs to be changed (i.e., increased) significantly during the winding that follows after the compaction (calendering) step.

The inventors have realized that compaction by calendering increases the bending stiffness and the brittleness of the electrode stack. Thus, the compacted electrode stack tends to fail when mechanically processed after the compacting step, for example by introducing or enlarging the curvature of the electrode stack. The resulting failures include, for example, delamination between the components, cracking within the components, or formation of electrical shunts between the components of the electrode stack. In particular, respective failure tends to occur when the compacted electrode is wound or bent into a cylindrical battery cell (also referred to as a jelly roll).

The increase in bending stiffness and brittleness is particularly pronounced for solid-state batteries, i.e., batteries comprising a solid-state separator rather than a liquid separator.

With the apparatus described above, the process steps of compacting, namely by calendering, and winding the electrode stack are combined, and may preferably be performed simultaneously. Winding the compacted electrode stack is avoided, thus avoiding the risk of failure, for example in the form of delamination or shunting, during the winding of the compacted electrode stack with increased bending stiffness and brittleness.

Hence, the compacting, namely by calendering, can be performed at high pressure and high throughput, ensuring the desired, minimized porosity of the compacted electrode stack while providing an efficient and economic production of the battery.

Moreover, the apparatus described above uses a minimum of rolls and motors, making the apparatus itself compact and cost-efficient.

Combining the winding and the calendering into a single step reduces the overall processing time, thus improving productivity.

Moreover, the components of the electrode stack, preferably the mechanically most stiff ones, can be subjected to tensile stress during the winding with said apparatus. This way, the use of said roll with its radial symmetry generates radial compressive stresses in the compacted electrode stack, which are beneficial to maintain lamination of the componentsof the produced jelly-roll battery.

The use of multiple calenders and the more evenly distributed calendering force also reduce the risk of damage to the electrode stack.

According to embodiments, the apparatus is adapted to perform said winding of the electrode stack on the roll and said calendering simultaneously.

According to an embodiment, the calender rolls of the plurality of calender rolls are arranged symmetrically around said roll, in particular arranged rotational-symmetrically about the axis of rotation of said roll or mirror-symmetrically about a mirror plane comprising the axis of rotation of said roll. Alternatively, or in addition, the calender rolls of the plurality of calender rolls may be arranged equidistantly along an azimuthal direction around the axis of rotation of said roll.

The symmetrical arrangement of the calender rolls around said roll ensures uniform pressure distribution during the calendering process. This brings enhanced stability and consistency to the calendering process, reducing the likelihood of uneven calendering and potential defects in the electrode stack. The improved uniformity of the calendering process ensures that no single area of the electrode stack is subjected to more pressure than another, thereby enhancing the quality and consistency of the final battery, in particular in terms of the surfaces and interfaces of/between its components.

The symmetrical arrangement of the calender rolls also minimizes the overall force onto said roll, beneficially supporting high-speed and high-throughput operation.

According to an embodiment, the apparatus is adapted to operate the calenders from the plurality of calenders such that said operation of each of said calenders generates a respective directed force onto said roll, and wherein the apparatus is further adapted to operate the calenders such that the directed forces onto said roll resulting from all calenders from the plurality of calenders cancel out.

This feature brings the advantage of maintaining the stability and balance of said roll during the winding and calendering process, minimizing unbalanced forces that could lead to mechanical wear or inaccuracies in the processed electrode stack.

Said roll may be a mandrel, in particular a winding mandrel. Alternatively, or in addition, said roll may comprise a holding element for holding the electrode stack, preferably an end of the electrode stack. The holding element may be a gripping element for gripping the electrode stack.

The directed forces may be radial forces directed at the axis of rotation of said roll. Alternatively, or in addition, said directed forces may be perpendicular to the axis of rotation of said roll.

The calenders from the plurality of calenders may be operated such that the directed forces generated by said calenders are equal in magnitude.

The apparatus may comprise a force-control module, the force-control module being adapted to adjust and/or to control said directed forces, such that forces acting on said roll cancel out in a plane perpendicular to the axis of rotation of said roll, in particular during the winding process. Alternatively, or in addition, the force-control module may be adapted to adjust and/or to control said directed forces such that a net force taking into account all forces acting onto said roll vanishes in a plane perpendicular to the axis of rotation of said roll, in particular during the winding process.

A force-control module may actively monitor and adjust the forces applied by the calenders, for example using suitable sensors. This feature enhances the apparatus by providing dynamic control over the forces, ensuring that any variations are corrected in real-time to maintain the balance and effectiveness of the winding and calendering process.

In some embodiments, the force-control module comprises a processor and a memory for this purpose.

According to some embodiments, the force-control module comprises a moveable mounting of the calender rolls regarding their distance from said roll, or from the axis of rotation of said roll, respectively, and a press-on element adapted to press the calender rolls onto said roll, thus adjusting the distance of the calender rolls from said roll and/or to adjust said directed forces.

According to an embodiment, each calender roll from the plurality of calender rolls is adapted to rotate around a respective axis of rotation. The calender rolls from the plurality of calender rolls are mounted such that their axes of rotation are moveable to adjust associated distances, each of said associated distances referring to a distance between the axis of rotation of one of the calender rolls and the axis of rotation of said roll.

According to an embodiment, the calender rolls from the plurality of calender rolls are mounted such that their axes of rotation are moveable in the radial direction with respect to the axis of rotation of said roll, in particular to adjust said distance.

In other words, the apparatus comprises a mounting system of the calender rolls, which allows for the movement of their axes of rotation. This feature brings the ability to adjust the distances between the calender rolls and said roll, thereby enabling precise control over the calendering process and ensuring uniform pressure application on the electrode stack.

Optionally, the axis of rotation of each of the calender rolls may be parallel to the axis of rotation of said roll. Alternatively, or in addition, at least one calender roll from the plurality of calender rolls may be mounted such that its axis of rotation is moveable to adjust a distance between said axis of rotation of the calender roll and the axis of rotation of said roll.

According to an embodiment, the winding of the electrode stack on said roll comprises performing at least three or at least five or at least ten turns of the electrode stack around said roll.

Alternatively, or in addition, the winding of the electrode stack on said roll may comprise performing at most 200 or at most 100 turns of the electrode stack around said roll.

The roll may be adapted to apply a force along a machine direction to the electrode stack, said force along the machine direction driving the electrode stack to wind on said roll. Alternatively, or in addition, said roll may be adapted to apply a torque around the axis of rotation of said roll to the electrode stack, said torque driving the electrode stack to wind on said roll.

This ensures that the electrode stack is properly aligned and tensioned as it winds around said roll.

Alternatively, or in addition, the apparatus may be an apparatus for a roll-to-roll process.

According to an embodiment, each calender from the plurality of calenders is adapted to apply a compressive force on the electrode stack.

The compressive force ensures that the electrode stack is properly compacted during the winding process. This ensures the structural integrity and desired density as well as porosity of the electrode stack as it is wound onto said roll.

The compressive force on the electrode stack may amount to at least 400 N/mm in at least one calender from the plurality of calenders, or in at least two calenders from the plurality of calenders, or in at least three calenders from the plurality of calenders.

The compressive forces may be constant or may change, in particular may increase, as the electrode stack is wound to an increasing thickness on said roll.

This ensures that the electrode stack is uniformly compressed, regardless of its thickness, thereby enhancing the quality and consistency of the wound electrode stack.

According to an embodiment, the apparatus comprises support rolls adapted to rotate around respective axes of rotation, said axes of rotation of the support rolls being parallel to the axis of rotation of said roll. The support rolls may be adapted to provide a radial force on said roll, said radial force being radial with respect to the axis of rotation of said roll. Said radial force may be smaller than the compressive force applied on the electrode stack by any of the calenders from the plurality of calenders.

The support rolls exert a radial force that helps stabilize said roll during the winding and calendering processes. The radial force provided by the support rolls ensures that said roll maintains its position and alignment, which improves the precision of the winding and calendering operations. The fact that the radial force is smaller than the compressive force applied by the calenders ensures that the primary calendering function is not compromised while still providing necessary support.

The support rolls may be smaller in diameter than any of the calender rolls from the plurality of calender rolls.

This allows for a more compact design and potentially reduces the overall weight and space requirements of the apparatus. Smaller support rolls can be more easily integrated into the existing structure without interfering with the (primary) calendering rolls, thereby enhancing the apparatus' efficiency and effectiveness.

Alternatively, or in addition, the radial force provided on said roll by each of the support rolls may be directed perpendicular to the compressive force applied on the electrode stack by each of the calenders from the plurality of calenders or may have a component perpendicular to the compressive force applied on the electrode stack by each of the calenders from the plurality of calenders.

Alternatively, or in addition, the apparatus may comprise a force-control module, the force-control module being adapted to control the radial force provided on said roll by the support rolls, such that forces acting on said roll cancel out in a plane perpendicular to the axis of rotation of said roll. In respective embodiments, the force-control module may be the force-control module described above in the context of controlling the directed forces, or it may be a force-control module independent of the force-control module described above in the context of controlling the directed forces.

The force-control module may be constructed similar to the force-control module described above in the context of controlling the directed forces.

The force-control module ensures that the radial forces are precisely regulated to maintain equilibrium in the forces acting on said roll. This precise control is beneficial for achieving high-quality winding and calendering, as it prevents any undue stress or deformation on said roll and the electrode stack.

According to an embodiment, said roll and/or at least one of the calender rolls comprise(s) a heater.

The heater may be integrated into said roll or the calender rolls, providing a mechanism for heating the electrode stack during the winding and calendering process. This brings the advantage of potentially improving the quality of the electrode stack by ensuring that the electrode stack is processed at an elevated temperature, which can enhance the laminating and bonding within the electrode stack.

In respective embodiments, the heater(s) may be adapted to heat the electrode stack to a temperature of at least 200°C during the winding of the electrode stack and/or during the calendering of the electrode stack. In embodiments, wherein the apparatus is adapted to perform said winding of the electrode stack on the roll and said calendering simultaneously, the heater may be adapted to heat the electrode stack to the temperature of at least 200°C during the simultaneous winding and calendering of the electrode stack.

According to an embodiment, the plurality of calender rolls comprises at least three calender rolls and the plurality of calenders comprises at least three calenders.

A respective arrangement ensures that the electrode stack undergoes calendering at multiple points, which may improve the uniformity and quality of the calendering process.

According to an embodiment, the calender rolls from the plurality of calender rolls are arranged around said roll with a distance between any pair of the calender rolls.

According to a second aspect, a method for fabricating a jelly-roll battery comprises winding an electrode stack on a roll. The method also comprises calendering the electrode stack using said roll.

According to embodiments, said winding and said calendering are performed simultaneously.

The method has similar advantages as described above in the context of the apparatus according to the first aspect of the invention.

In particular, combining the winding and calendering processes into a single step streamlines the manufacturing process and avoids a need to wind a compacted electrode stack, which is typically brittle and prone to damage after the compaction. This applies in particular to electrode stacks for solid-state batteries.

According to an embodiment, the method uses the apparatus according to the first aspect of the invention, said roll of said apparatus being said roll of the method, and the calendering of the method using the plurality of calenders comprised in said apparatus.

According to an embodiment, the electrode stack comprises electrodes and a separator, the separator separating the electrodes from each other. Optionally, the electrodes may comprise an anode and a cathode.

The separator ensures that the electrodes do not short-circuit while allowing ionic conductivity.

The separator may be a solid-state separator.

The separator may separate the electrodes from each other electrically and/or physically.

According to an embodiment, the calendering is performed to reduce a porosity of at least one of the electrodes by at least 5% or by at least 10% or by at least 15%. Alternatively, or in addition, the calendering may be performed to reduce a porosity of at least one of the electrodes to below 15%.

Alternatively, or in addition, the calendering may be performed to reduce a thickness of at least one of the electrodes by at least 10% or by at least 20%.

Alternatively, or in addition, the calendering may be performed to reduce a porosity of the separator at least by a factor of 2 or at least by a factor of 3.

Alternatively, or in addition, the calendering may be performed to reduce a thickness of the separator by at least 20% or by at least 30%.

The method may be a roll-to-roll process or may be part of a roll-to-roll process. Alternatively, or in addition, in the process step of calendering the electrode stack using said roll, the electrode stack may be wound on said roll or may be wound on said roll at least in part.

According to an embodiment, the method further comprises packaging the wound electrode stack in a housing, wherein the electrode stack is not unwound in between the winding of the electrode stack on said roll and the packaging of the wound electrode stack in the housing and/or wherein the electrode stack is not unwound in between the calendering the electrode stack using said roll and the packaging of the wound electrode stack in the housing, in particular, wherein the housing may be a housing of the jelly-roll battery.

This ensures that the electrode stack remains in its wound state throughout the entire production process, thereby maintaining the structural integrity and alignment of the layers. The housing serves as the final containment for the jelly-roll battery, providing protection and stability to the wound electrode stack. A respective method reduces the risk of damage to the electrode stack, which can occur if the stack were to be unwound and rewound during the packaging process.

### LIST OF FIGURES

In the following, a detailed description of the present disclosure and examples thereof are given with reference to the figures. The figures show schematic illustrations of
Fig. 1: an apparatus according to a first embodiment of the present disclosure;
Fig. 2: an apparatus according to a second embodiment of the present disclosure;
Fig. 3: an apparatus according to an embodiment of the present disclosure similar to the second embodiment;
Fig. 4: an apparatus according to an embodiment of the present disclosure similar to the first embodiment;
Fig. 5: a side view of an apparatus according to the first embodiment;
Fig. 6: a method according to an embodiment of the present disclosure;
Fig. 7: an electrode stack; and
Fig. 8: the load on one of the calender rolls and the resulting deflection of the calender roll.

### DESCRIPTION OF EXAMPLES

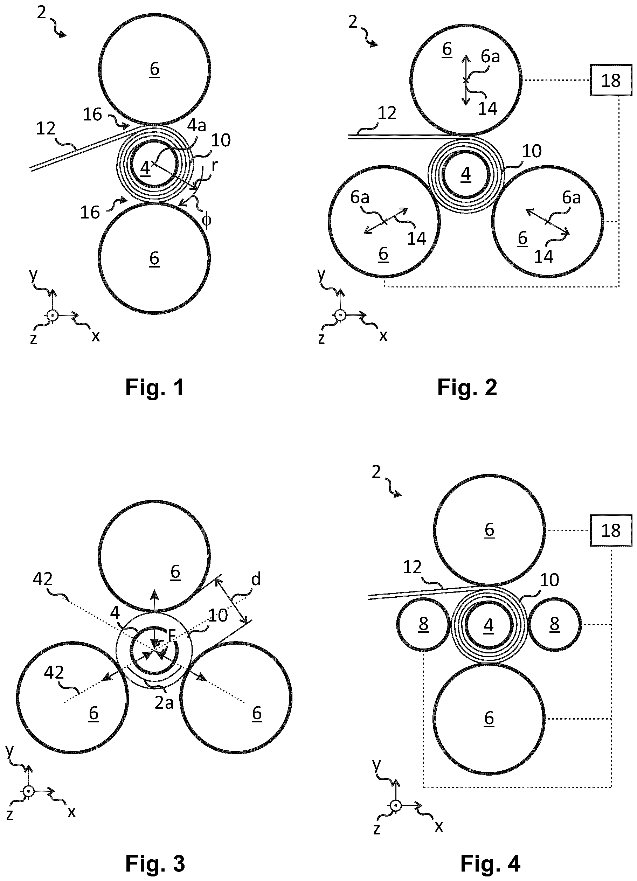

Fig. 1 illustrates an apparatus 2 for winding an electrode stack 12 on a roll 4 and calendering the electrode stack 12 using the roll 4 according to a first embodiment. The roll 4 is adapted to rotate around an axis of rotation 4a. The winding 22 of the electrode stack 12 on the roll 4 is associated with the rotation of the roll 4. A plurality of calender rolls 6 is arranged around the roll 4. Each calender 16 is formed by the roll 4 and a different one of the calender rolls 6 from the plurality of calender rolls 6.

Two different coordinate systems are illustrated in Fig. 1. The coordinate systems do not add any physical structure to the apparatus 2, but serve as reference frames.

The cartesian coordinate system x, y, z is orientated such that the z axis coincides with the axis of rotation 4a of the roll 4. The extension of the electrode stack 12 along said z direction corresponds to the width of the electrode stack 12. The machine direction is in the x-y plane, perpendicular to the z axis and the axis of rotation 4a of the roll 4.

The z direction of the cylindrical coordinate system z, r, ϕ is identical to the z direction of the cartesian coordinate system x, y, z. The azimuthal direction ϕ is around the axis of rotation 4a of the roll 4. The radial direction refers to a distance to the axis of rotation 4a of the roll 4 perpendicular to the axis of rotation 4a of the roll 4.

The roll 4 is mounted rotatably around its axis of rotation 4a using anti-friction bearings (not shown). The axis of rotation 4a of the roll 4 is parallel to the z axis.

The calender rolls 6 are configured to rotate around respective axes of rotation 6a (not shown in Fig. 1). The calender rolls 6 are mounted accordingly using anti-friction bearings (not shown).

The axes of rotation 6a of the calender rolls 6 are parallel to the axis of rotation 4a of the roll 4. The axes of rotation 6a of the calender rolls 6 are parallel to the z axis.

A motor (not shown) is associated with each of the calender rolls 6 to drive the rotation of the respective calender roll 6 around its respective axis of rotation 6a.

According to some embodiments, a further motor (not shown) is associated with the roll 4 to drive the rotation of the roll 4 around its axis of rotation 4a. In alternative embodiments, the roll 4 is not actively driven by a motor, but is driven indirectly, at least in part by the rotation of the calender rolls 6.

The calender rolls 6 are arranged around the roll 4. The roll 4 is also referred to as the central roll 4 in the context of this disclosure.

More specifically, the calender rolls 6 are arranged symmetrically around the roll 4.

The symmetry may refer to a mirror symmetry about a mirror plane comprising the axis of rotation 4a of the central roll 4, or comprising the z axis, respectively. In the embodiment depicted in Fig. 1, the x-z plane through the axis of rotation 4a of the central roll 4 forms a respective mirror plane. The y-z plane through the axis of rotation 4a of the central roll 4 forms another respective mirror plane.

The symmetry may refer to a rotational symmetry about the axis of rotation 4a of the central roll 4, or around the z axis, respectively. In the context of this disclosure, the term "rotational symmetry" refers to an n-fold discrete rotational symmetry.

In the embodiment depicted in Fig. 1, the calender rolls 6 are arranged around the roll 4 with a two-fold discrete rotational symmetry. In alternative embodiments, the calender rolls 6 are arranged around the roll 4 with an n-fold discrete rotational symmetry with n > 2. An example is depicted in Fig. 3, wherein the calender rolls 6 are arranged around the roll 4 with a three-fold discrete rotational symmetry.

The electrode stack 12 is typically provided in the form of a web or a band, or with a length in the x-y plane significantly larger than its width along the z direction, respectively.

During operation, the rotation of the central roll 4 around the axis of rotation 4a winds the electrode stack 12 around the central roll 4. This produces the wound electrode stack 10.

For this purpose, one end of the electrode stack 12 is fixed on the central roll 4.

The calender rolls 6 are arranged such that the central roll 4 and any of the calender rolls 6 together form a calender 16. In other words, the central roll 4 and any of the calender rolls 6 together exert a compressive force onto the electrode stack 12 as the electrode stack 12 passes in between the central roll 4 and the respective calender roll 6.

For this purpose, the distances between the central roll 4 and the calender rolls 6 are selected to be smaller than the thickness of the provided electrode stack 12, i.e., of the electrode stack 12 prior to entering any of said calenders 16.

The calender 16, or the compressive force exerted onto the electrode stack 12 as it passes in between the central roll 4 and the calender roll 6 of said calender 16, acts to compact the electrode stack 12.

The wound electrode stack 10 may hence be referred to as a compacted electrode stack 10.

Optionally, a heater or a plurality of heaters is arranged in at least one of the central roll 4 and the calender rolls 6, to heat the electrode stack 12 to a temperature of around 300°C while said compressive force is applied (not shown).

According to some embodiments, the jelly-roll battery is identical to the wound electrode stack 10. According to alternative embodiments, the wound electrode stack 10 is packaged in a housing (not shown) to produce the jelly-roll battery.

The apparatus 2 and the described method 20 for producing the jelly-roll battery have the advantage that the electrode stack 12 is compacted already having a (i.e., non-zero) curvature, i.e., around the z axis or around the axis of rotation 4a of the central roll 4, respectively. Preferably, the curvature that the wound electrode stack 10 has on the central roll 4 is identical to the desired curvature in the final jelly-roll battery. Thus, any need to change the curvature of the compacted electrode stack 10 can be avoided, reducing the risk of failure, for example due to mechanical breakage, shunts, or delamination. In conventional methods or apparatus this risk is high, as the compacted, brittle electrode stack is wound into a jelly-roll battery after the compaction.

Due to the symmetrical arrangement of the calender rolls 6, a minimum net force in the x-y plane is exerted on the central roll 4, so that it does not have to have a high bending stiffness and can therefore be designed thin, i.e., with a diameter small than the diameter of any of the calender rolls 6. This allows for a quick removal of the central roll 4 when the electrode stack 12 is wound, so that the central roll 4 can easily and quickly be taken out of the apparatus 2 with the wound electrode stack 10 thereon for removing the wound electrode stack 10, re-inserting the central roll 4, and winding another section of the electrode stack 12 around the central roll 4 into the next wound electrode stack 10.

The apparatus 2 has the advantage of winding and compacting the electrode stack 12 into a battery, such as a jelly-roll battery, with a small core and a high energy density.

The calender rolls 6 are mounted in such a way that they can exert a defined pressure on the central roll 4 regardless of the winding diameter as the radius of the wound electrode stack 10 changes.

The proposed apparatus 2 and method 20 also benefit from the following effect: By providing the electrode stack 12 with an asymmetrical arrangement of the components 32, 34, 36, 38 of the electrode stack 12 within the electrode stack 12, the individual components 32, 34, 36, 38 of the electrode stack 12 can be compacted to different degrees. This results in the components 32, 34, 36, 38 of the electrode stack 12 being elongated to different degrees. Similar to a bimetal, in which a different elongation of the components is caused by thermal expansion, this elongation leads to a curvature of the electrode stack 12. The described effect can be used to create a bend around the central roll 4 by providing the electrode stack 12 with the components 32, 34, 36, 38 of the electrode stack 12 arranged asymmetrically in the electrode stack 12.

Some components 32, 34, 36, 38 of the electrode stack 12, preferably the most rigid ones, can be subjected to tensile stress during the winding process described above. As a result of the radial symmetry of the central roll 4, the necessary radial stresses can be generated in the wound electrode stack 10.

The described apparatus 2 and method 20 eliminate complex process steps (e.g. folding or stacking for pouch cells or prismatic cells), as all steps take place in a single, simple, integrated process.

Moreover, the electrode stack 10, 12, and in particular the inner layers thereof are repeatedly calendered, which leads to a further advantageous reduction in porosity.

The described apparatus 2 and method 20 can be used to achieve all of the following beneficial effects in a single process step:
(1) Reduction of porosity of the components 32, 34, 36, 38 of the electrode stack 12 to below a threshold value required to produce a reliably working battery.
(2) Creation of maximized contact surfaces between the components 32, 34, 36, 38 of the electrode stack 12.
(3) The simultaneous winding and calendering reduces mechanical damage, e.g. due to delamination of the components 32, 34, 36, 38 of the electrode stack 12 or due to breakage of individual components 32, 34, 36, 38 of the electrode stack 12.
(4) Compliance with limit values for mechanical stretching or compression of the components 32, 34, 36, 38 of the electrode stack 12. Due to the cylindrical shape of the wound electrode stack 10, compression in the radial direction in the calenders 16 results in compression of the electrode stack 10 in the circumferential direction.

In the following, exemplary values are given for the porosity of the components 32, 34, 36, 38 of the electrode stack 12 before and after applying the apparatus 2, or the method 20, respectively, according to this disclosure:

| component 32, 34, 36, 38 | before | after |
|---|---|---|
| first electrode 32 | 40 - 60% | 5 - 15% |
| separator 36 | 50 - 70% | 3 - 10% |
| second electrode 34 | 40 - 60% | 25 - 35% |

Therein, the first electrode 32 is a composite cathode 32, the separator 36 is a solid-state separator 36, and the second electrode 34 is a composite anode 34,

In the following, exemplary values are given for the thickness of the components 32, 34, 36, 38 of the electrode stack 12 before and after applying the apparatus 2, or the method 20, respectively, according to this disclosure:

| component 32, 34, 36, 38 | before | after |
|---|---|---|
| first electrode 32 | 150 - 250 µm | 50 - 100 µm |
| separator 36 | 40 - 200 µm | 20 - 50 µm |
| second electrode 34 | 30 - 60 µm | 20 - 50 µm |
| current collector 32b, 34b | 10 - 20 µm | 10 - 20 µm |

Therein, as well, the first electrode 32 is a composite cathode 32, the separator 36 is a solid-state separator 36, and the second electrode 34 is a composite anode 34,

The fabrication of batteries such as jelly-roll batteries puts strict requirements on the interface roughness, in particular on the interface roughness between the first electrode 32 and the separator 36 and on the interface roughness between the second electrode 34 and the separator 36, The described apparatus 2 and method 20 fulfill the respective requirements. For this purpose, the repeated calendering as the wound electrode stack 10, or at least the inner layers thereof, take repeated turns on the central roll 4, is particularly beneficial. Correspondingly, the repeated calendering of the wound electrode stack 10 is beneficial for controlling the surface roughness of the insulation layer 38/separator 38, or the interface roughness at the surfaces between the insulation layer 38/separator 38 and the electrodes 32, 34, respectively.

In the depicted embodiment, the apparatus is adapted to perform the winding and the calendering of the electrode stack 10, 12 simultaneously. In alternative embodiments (not shown), the electrode stack 10, 12 or a part of the electrode stack 10, 12 is first wound on the central roll 4 and then calendered using the calender rolls 6. In some of the respective examples, the calender rolls 6 are kept at a larger distance from the central roll 4, such as not to calender the electrode stack 10, 12, while the electrode stack 10, 12, or said part of the electrode stack 10, 12, respectively, is being wound on the central roll 4. Only when the winding of the electrode stack 10, 12 or of said part of the electrode stack 10, 12 on the central roll 4 is finished, the calender rolls 6 are set to a smaller distance from the central roll 4 (as described in detail below) suitable to calender the electrode stack 10, 12, and/or suitable to calender said part of the electrode stack 10, 12, respectively.

To improve control over the surface roughnesses of the components 32, 34, 36, 38 of the electrode stack 12 further, and/or to improve control over the interface roughnesses at the interfaces between the components 32, 34, 36, 38 of the electrode stack 12 further, improvements to calender rolls known to the person skilled in the arts from other applications of calendering are optionally applied to the central roll 4 and/or to the calender rolls 6.

These improvements include the fabrication of the rolls 4, 6 from particularly hard materials (as described, e.g., in par. [0014] of DE 10 2020 214087 A1).

In some embodiments (not shown), the central roll 4 and/or the calender rolls 6 have/has a barrel shape, or a larger diameter in the center than away from the center, respectively.

Fig. 2 illustrates an apparatus 2 for winding an electrode stack 12 on a roll 4 and simultaneously calendering the electrode stack 12 using the roll 4 according to a second embodiment.

The apparatus 2 according to the second embodiment is generally similar to the apparatus 2 according to the first embodiment. Similar elements are indicated with identical reference numerals. For the sake of brevity and to avoid repetition, respective elements are not described again, but reference is made to the respective description above in the context of the first embodiment.

As compared to the apparatus 2 according to the first embodiment, the apparatus 2 according to the second embodiment is formed with several modifications: It comprises three calender rolls 6 instead of two calender rolls 6. It is provided with a force-control module 18. Further, the calender rolls 6 are movable along the direction 14. In the context of Fig. 2, the apparatus 2 according to the second embodiment is described with all the respective modifications.

According to alternative embodiments (not shown), the apparatus 2 is formed with one of said modifications (i.e., having the three calender rolls 6 or the force-control module 18 or the moveable calender rolls 6 along the direction 14) without necessarily having the other two modifications.

According to alternative embodiments (not shown), the apparatus 2 is formed with only two of said modifications (i.e., having the three calender rolls 6 and the force-control module 18, or the three calender rolls 6 and the moveable calender rolls 6 along the direction 14, or the force-control module 18 and the moveable calender rolls 6 along the direction 14) without necessarily having the other modification.

The embodiment of the apparatus 2 with three calender rolls 16 as shown in Fig. 2 has the advantage to provide more evenly distributed forces onto the electrode stack 12 and onto the central roll 4. This improves the winding and calendering process further, resulting in an improved homogeneity of the surfaces and interfaces of the components 32, 34, 36, 38 in the wound electrode stack 10.

In the apparatus 2 according to the second embodiment, the calender rolls 6 are mounted moveably.

More specifically, the calender rolls 6 are mounted such that the axes of rotation 6a of the calender rolls 6 are movable along a direction 14 in the x-y plane perpendicular to the axis of rotation 4a of the central roll 4. Said direction 14 preferably is along the radial direction r with respect to the axis of rotation 4a of the central roll 4.

In other words, the calender rolls 6 are mounted such that the distance of the calender rolls 6, or of their axes of rotation 6a, respectively, to the axis of rotation 4a of the central roll 4 is adjustable.

Respective embodiments allow for providing a constant compressive force onto the electrode stack 12 in the calenders 16 as the wound electrode stack 10 grows to increasing thickness on the central roll 4.

Embodiments, wherein the distance between the calender rolls 6, or their axes of rotation 6a, respectively, to the axis of rotation 4a of the central roll 4 are fixed, are possible. However, in respective embodiments the force onto the wound electrode stack 10 grows as the thickness of the wound electrode stack 10 on the central roll 4 increases, which may be undesirable in some applications.

The apparatus 2 according to the second embodiment comprises a force-control module 18 adapted to control the force generated by one or each of the calender rolls 6, or by the calender 16, respectively, comprising the respective calender roll(s) 6, onto the electrode stack 10, or onto the central roll 4 respectively.

Notably, the force onto the central roll 4 generated by the calender roll 6 (or by the calender 16 comprising said calender roll 6, respectively) is identical in its absolute value to the compressive force generated by said calender roll 6 (or by the calender 16 comprising said calender roll 6, respectively) onto the electrode stack 10, but opposite in direction, as dictated by Newton's laws. In the context of this disclosure, said force onto the central roll 4 is also referred to as the directed force F onto the roll 4. In other words, the directed force F onto the roll 4 generated by any of the calender rolls 6 (or by the calender 16 comprising said calender roll 6, respectively) is identical in its absolute value but opposite in direction to the compressive force on the electrode stack 10 generated by the respective calender roll 6 (or by the calender 16 comprising said calender roll 6, respectively).

According to an embodiment, the force-control module 18 controls the distance(s) of the calender roll(s) 6, or of its (their) respective axis (axes) of rotation 6a, from the axis of rotation 4a of the central roll 4 to control the force generated by the respective calender roll(s) 6, or by the associated calender(s) 16, respectively.

In the depicted embodiment, the force-control module 18 controls the distance of the calender roll(s) 6, or of its (their) respective axis (axes) of rotation 6a, from the axis of rotation 4a of the central roll 4 to control the force generated by the respective calender roll(s) 6, or by the associated calender(s) 16, respectively.

In other words, the force-control module 18 controls the position of at least one of the calender rolls 6 along the corresponding direction 14 to control the force generated by the respective calender roll(s) 6, or by the associated calender(s) 16, respectively.

The apparatus 2 is operated such that the directed forces F onto the central roll 4 resulting from all calender rolls 6, or from all calenders 16, respectively, cancel out. In other words, the force-control module 18 controls the distance of at least one of the calender rolls 6 (or of its respective axis of rotation 6a, respectively) from the axis of rotation 4a of the central roll 4 such that the directed forces F onto the central roll 4 resulting from all calender rolls 6 (or from all calenders 16, respectively) cancel out.

According to some embodiments, the force-control module 18 controls the distances of the calender rolls 6, or of their respective axes of rotation 6a, from the axis of rotation 4a of the central roll 4 such that the directed forces F onto the central roll 4 resulting from all calender rolls 6, or from all calenders 16, respectively, cancel out.

This feature brings the advantage of maintaining the stability and balance of the roll 4 during the winding and calendering process, preventing unbalanced forces that could lead to mechanical wear or inaccuracies in the electrode stack 10.

Fig. 3 illustrates the directed forces F onto the central roll 4 generated by the calender rolls 6.

A directed force F is generated by the calender roll 6 of each calender 16. For optimum balance and stability of the central roll 4, the force-control module 18 controls the generated directed forces F such that the resulting net directed force F, defined as the sum of the directed forces F generated by all the calender rolls 6 on the central roll 4, is minimized in the x-y plane perpendicular to the axis of rotation 4a of the roll 4. In other words, the force-control module 18 controls the generated directed forces F such that they cancel out in the x-y plane perpendicular to the axis of rotation 4a of the roll 4.

Fig. 3 further illustrates a distance d between a pair of the calender rolls 6, i.e., a non-zero distance d between the calender rolls 6 of said pair. Preferably, a respective, non-zero distance d is kept between any pair of the calender rolls 6. This ensures that the calender rolls do not block and prevent each other from reaching and compacting the electrode stack 10 on the roll 4.

According to some embodiments, the calender rolls 6 have identical diameters, or identical radii, respectively. In such embodiments, the maximum identical radius R of the calender rolls 6 to ensure the distance d between the calender rolls 6 can be expressed in terms of the radius r of the wound electrode stack 10 on the roll 4 as: R = r/[√3 - 1 - tan(a/2)] = 6,46 r. In the equation, √3 denotes the square root of three. In the equation, a is half of the angle 2a between two planes 42, each of the two planes 42 comprising the axis of rotation 4a of the roll 4 and the axis of rotation 6a of a different calender roll 6 of a pair of neighboring calender rolls 6. In the depicted embodiment comprising three calender rolls 6, the respective angle a is 60°, as the axes of rotation 6a of the calender rolls 6 are arranged on an equilateral triangle with an angle of 2a = 120° between the two planes 42 each comprising the axis of rotation 4a of the roll 4 and the axis of rotation 6a of another calender roll 6 of a pair of neighboring calender rolls 6.

Fig. 4 illustrates an apparatus 2 for winding an electrode stack 12 on a roll 4 and simultaneously calendering the electrode stack 12 using the roll 4 according to a further embodiment.

The apparatus 2 according to the embodiment of Fig. 4 is generally similar to the apparatus 2 according to the first embodiment. Similar elements are indicated with identical reference numerals. For the sake of brevity and to avoid repetition, respective elements are not described again, but reference is made to the respective description above in the context of the first embodiment.

As compared to the apparatus 2 according to the first embodiment, the apparatus 2 according to the embodiment of Fig. 4 is further equipped with support rolls 8.

The support rolls 8 are mounted rotatably around respective axes of rotation (not shown) parallel to the z axis, or parallel to the axis of rotation 4a of the roll 4, respectively. The support rolls 8 are mounted accordingly using anti-friction bearings (not shown).

The support rolls 8 are arranged to be in physical contact with the electrode stack 12 being wound up on the roll 4.

According to some embodiments, the support rolls 8 are actively driven using motors (not shown). According to alternative embodiments, the support rolls 8 are not actively driven, but follow the rotation of the roll 4 mediated by the contact to the electrode stack 12.

In the depicted embodiment, two support rolls 8 are shown. However, alternative embodiments of the apparatus 2 comprise a smaller or larger number of support rolls 8. According to an embodiment (not shown), one support roll is provided between a pair of the calender rolls 6 of the second embodiment. According to an alternative embodiment (not shown), three support rolls are provided in an apparatus similar to the one of the second embodiment, each of said support rolls arranged between a pair of the calender rolls 6.

The support rolls 8 apply less force onto the electrode stack 12 being wound up on the roll 4 than the calender rolls 6. In other words, the support rolls 8 apply less force onto the roll 4 than the calender rolls 6, as the force resulting from the support rolls 8 onto the roll 4 is opposite to the force resulting from the support rolls 8 onto the electrode stack 10, as describe above accordingly for the (compressive/directed) forces generated by the calender rolls 6.

The support rolls 8 serve to distribute the forces F onto the roll 4, or onto the electrode stack 10, respectively, more evenly along the azimuthal direction ϕ. This can be seen comparing Fig. 4 and Fig. 1. In the apparatus 2 according to the embodiment of Fig. 1, a force (directed force, or compressive force, respectively) onto the roll 4, or onto the electrode stack 10, respectively, is generated every 180° along the azimuthal direction ϕ. In contrast, in the apparatus 2 according to the embodiment of Fig. 4, a force onto the roll 4, or onto the electrode stack 10, respectively, is generated every 90° along the azimuthal direction ϕ. The more even distribution of the forces F onto the roll 4, or onto the electrode stack 10, respectively improve the stability of the roll 4, and thus of the apparatus 2, improving the surface and interface quality of the components 32, 34, 36, 38 of the battery produced with said apparatus 2 or method 20.

In embodiments with the support rolls 8, the apparatus 2 optionally comprises a force-control module 18. According to some embodiments (not shown), the force-control module 18 controls the force generated by the support rolls 8 onto the roll 4. According to the depicted embodiment, the force-control module 18 controls the force generated by both the calender rolls 6 and the support rolls 8 onto the roll 4.

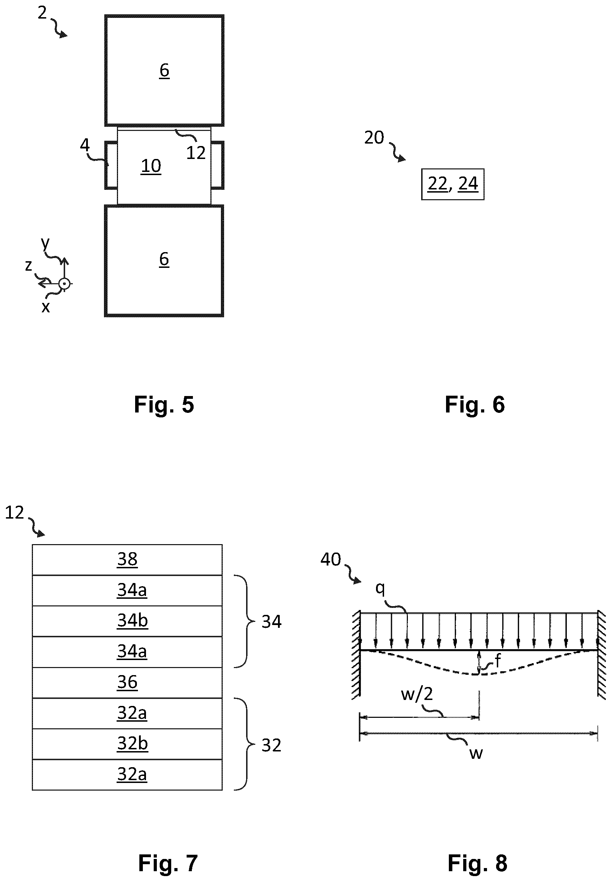

Fig. 5 gives a view onto the apparatus 2 according to the first embodiment as seen from the x direction.

Fig. 6 illustrates a method 20 for fabricating a jelly-roll battery according to an embodiment.

The method 20 comprises at step 22 winding 22 an electrode stack 12 on a roll 4. The method 20 also comprises calendering 24 the electrode stack 12 using said roll 4.

Preferably, the winding 22 and the calendering 24 of the electrode stack 12 using said roll 4 are performed simultaneously.

Fig. 7 illustrates an exemplary electrode stack 12, which comprises electrodes 32 and 34, and a separator 36, The electrodes 32 and 34 are separated from each other by the separator 36,

Each of the electrodes 32 and 34 comprises a respective current collector 32b, 34b and layers 32a, 34a of the active material (also referred to as active layers 32a, 34a) on either side of the current collector 32b, 34b. In alternative embodiments (not shown) the active layers 32a, 34a are only provided on one side of the current collector 32b, 34b in one of the electrodes 32, 34 or in both of the electrodes 32, 34, The electrodes 32, 34 comprising the current collector 32b, 34b and the active layer(s) are also referred to as composite electrodes 32, 34 in the context of this disclosure.

The electrode stack 12 further comprises an insulation layer 38, to insulate subsequent layers of the electrode stack 12 from each other as the electrode stack 10, 12 is wound on the roll 4. In particular, the insulation refers to an electrical insulation. In the depicted embodiment, the insulation layer 38 is similar to the separator 36, i.e., it has some or all of the characteristics described in the context of the separator 36, In other words, the insulation layer 38 may be a separator 36 and may be referred to as such.

In the depicted embodiment, the first electrode 32 is a cathode 32, and the second electrode 34 is an anode 34, In alternative embodiments (not shown), the first electrode 32 is an anode, and the second electrode 34 is a cathode. Since the respective anode (cathode) comprises the current collector 32b, 34b and the active layer(s) 32a, 34a, it is also referred to as composite anode (cathode) in the context of this disclosure.

The separator 36 is adapted to provide an ionic conductivity exceeding its electronic conductivity. In other words, the electronic conductivity of the separator 36 is practically vanishing, while the ionic conductivity of the separator 36 is suitable to establish a battery using the electrodes 32, 34 and the separator 36 therebetween.

In the depicted embodiment, the separator 36 is a solid-state separator 36, In other words, the depicted electrode stack 10 is an electrode stack 10 of a solid-state battery, and the jelly-roll battery to be produced is a solid-state jelly-roll battery. While the described apparatus 2 and method 20 are particularly beneficial for respective solid-state separators 36 and solid-state batteries, they may also be applied to batteries with a separator 36 comprising a liquid electrolyte.

The battery may be a Li ion battery or a Na ion battery or a multivalent system (e.g., comprising Mg and Ca ions). The electrode stack 12 may be an electrode stack 12 for a respective battery.

Exemplary solid-state separators 36 comprise a sulphide solid-state electrolyte, an oxide solid-state electrolyte, a halide solid-state electrolyte, a phosphide solid-state electrolyte or a polymeric solid-state electrolyte or a composite of any of the foregoing with an electrically insulating polymer.

An exemplary active layer 32a, 34a for a cathode 32, 34 comprises a material comprising Li, such as Nickel-Cobalt-Manganese (NCM), Lithium Iron Phosphate (LFP) or Lithium Nickel Manganese Oxide (LNMO), or a material comprising Na, such as NaMnO or NaFeP.

An exemplary active layer 32a, 34a for an electrode 32, 34 serving as an anode 32, 34 comprises Lithium Titanium Oxide (LTO), Li, graphite, hard carbon, silicon, or InLi.

The thickness of any of the components 32, 34, 36, 38 of the electrode stack 12 may differ from the thickness(es) of one or all of the other components 32, 34, 36, 38 of the electrode stack 12.

The width of one of the components 32, 34, 36, 38 of the electrode stack 12 may differ from the width(s) of one or all of the other components 32, 34, 36, 38 of the electrode stack 12. The width refers to the extension along the z axis shown in Fig. 1 to Fig. 5, or along the direction of the axis of rotation 4a of the roll 4, respectively.

As illustrated in Fig. 8, a Timoshenko beam model has been applied to estimate parameters and dimensions of the rolls 4, 6 to achieve a significant compressive force and compression of the electrode stack 10, 12.

According to the setup depicted in Fig. 8, the maximum deflection f of the roll 4, 6 is f = (5 q w^5) / (384 E I) wherein q denotes the line load; w denotes the width of the roll 4, 6; R denotes the radius of the roll 4, 6; E denotes the modulus of elasticity of the roll 4, 6; and I = π R^4/4 denotes the area moment of inertia.

With a typical line load q = 1000 N/mm, width of the roll w = 120 mm, the modulus of elasticity of the roll 4, 6 being produced from steel E = 210 kN / mm^2 and a radius of the roll R = 30 mm, the resulting deflection f of the roll 4, 6 is f = 0.02 mm.

This deflection can be compensated by using barrel-shaped rolls 4, 6, or convex bale shaped rolls 4, 6, respectively.

Alternatively or in addition, additional rolls can be fitted to support the calender rolls from the outside, so that the effective line load on the calender rolls is reduced and thus the deflection is reduced.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. An apparatus (2) for winding (22) an electrode stack (12) on a roll (4) and calendering (24) the electrode stack (12) using said roll (4), the apparatus (2) comprising:
said roll (4), wherein said roll (4) is adapted to rotate around an axis of rotation (4a), the winding (22) of the electrode stack (12) on said roll (4) being associated with said rotating of said roll (4);
a plurality of calender rolls (6) arranged around said roll (4); and
a plurality of calenders (16), each of said calenders (16) formed by said roll (4) and a different one of the calender rolls (6) from the plurality of calender rolls (6).

2. The apparatus (2) according to claim 1, wherein said apparatus (2) is adapted to perform the winding (22) of the electrode stack (12) on said roll (4) and the calendering (24) of the electrode stack (12) using said roll (4) simultaneously.

3. The apparatus (2) according to claim 1 or 2, wherein the calender rolls (6) of the plurality of calender rolls (6) are arranged symmetrically around said roll (4), in particular arranged rotational-symmetrically about the axis of rotation (4a) of said roll (4) or mirror-symmetrically about a mirror plane comprising the axis of rotation (4a) of said roll (4), and/or wherein the calender rolls (6) of the plurality of calender rolls (6) are arranged equidistantly along an azimuthal direction (ϕ) around the axis of rotation (4a) of said roll (4).

4. The apparatus (2) according to any of the preceding claims, adapted to operate the calenders (16) from the plurality of calenders (16) such that said operation of each of said calenders (16) generates a respective directed force (F) onto said roll (4), and wherein the apparatus (2) is further adapted to operate the calenders (16) such that the directed forces (F) onto said roll (4) resulting from all calenders (16) from the plurality of calenders (16) cancel out,
wherein, optionally:
said directed forces (F) are perpendicular to the axis of rotation (4a) of said roll (4); and/or
said directed forces (F) are radial forces directed at the axis of rotation (4a) of said roll (4); and/or
the calenders (16) from the plurality of calenders (16) are operated such that the directed forces (F) generated by said calenders (16) are equal in magnitude; and/or
the apparatus (2) comprises a force-control module (16), the force-control module (16) being adapted to adjust and/or to control said directed forces (F),
such that a net force taking into account all forces acting onto said roll (4) vanishes in a plane perpendicular to the axis of rotation (4a) of said roll (4), in particular during the winding process, and/or
such that forces acting on said roll (4) cancel out in a plane perpendicular to the axis of rotation (4a) of said roll (4), in particular during the winding process.

5. The apparatus (2) according to any of the preceding claims, wherein each calender roll (6) from the plurality of calender rolls (6) is adapted to rotate around a respective axis of rotation (6a), and
wherein the calender rolls (6) from the plurality of calender rolls (6) are mounted such that their axes of rotation (6a) are moveable to adjust associated distances, each of said associated distances referring to a distance between the axis of rotation (6a) of one of the calender rolls (6) and the axis of rotation (4a) of said roll (4); and/or
wherein at least one calender roll (6) from the plurality of calender rolls (6) is mounted such that its axis of rotation (6a) is moveable to adjust a distance between said axis of rotation (6a) of the calender roll (6) and the axis of rotation (4a) of said roll (4),
wherein, optionally, the axis of rotation (6a) of each of the calender rolls (6) is parallel to the axis of rotation (4a) of said roll (4).

6. The apparatus (2) according to any of the preceding claims,
wherein the winding (22) of the electrode stack (12) on said roll (4) comprises performing at least three or at least five or at least ten turns of the electrode stack (12) around said roll (4), and/or
wherein the winding (22) of the electrode stack (12) on said roll (4) comprises performing at most 200 or at most 100 turns of the electrode stack (12) around the said (4); and/or
wherein said roll (4) is adapted to apply a force along a machine direction to the electrode stack (12), said force along the machine direction driving the electrode stack (12) to wind on said roll (4); and/or
wherein said roll (4) is adapted to apply a torque around the axis of rotation (4a) of said roll (4) to the electrode stack (12), said torque driving the electrode stack (12) to wind on said roll (4); and/or
wherein the apparatus (2) is an apparatus (2) for a roll-to-roll process.

7. The apparatus (2) according to any of the preceding claims, wherein each calender (16) from the plurality of calenders (16) is adapted to apply a compressive force (-F) on the electrode stack (12),
wherein, optionally:
the compressive force (-F) on the electrode stack (12) amounts to at least 400 N/mm in at least one calender (16) from the plurality of calenders (16), or in at least two calenders (16) from the plurality of calenders (16), or in at least three calenders (16) from the plurality of calenders (16); and/or
the compressive forces (-F) are constant or change, in particular increase, as the electrode stack (12) is wound to an increasing thickness on said roll (4).

8. The apparatus (2) according to claim 7, further comprising support rolls (8) adapted to rotate around respective axes of rotation, said axes of rotation of the support rolls (8) being parallel to the axis of rotation (4a) of said roll (4), wherein the support rolls (8) are adapted to provide a radial force on said roll (4), said radial force being radial with respect to the axis of rotation (4a) of said roll (4), wherein said radial force is smaller than the compressive force (-F) applied on the electrode stack (12) by any of the calenders (16) from the plurality of calenders (16),
wherein, optionally
the support rolls (8) are smaller in diameter than any of the calender rolls (6) from the plurality of calender rolls (6); and/or
the radial force provided on said roll (4) by each of the support rolls (8) is directed perpendicular to the compressive force (-F) applied on the electrode stack (12) by each of the calenders (16) from the plurality of calenders (16) or has a component perpendicular to the compressive force (-F) applied on the electrode stack (12) by each of the calenders (16) from the plurality of calenders (16); and/or
the apparatus (2) comprises a force-control module (16), the force-control module (16) being adapted to control the radial force provided on said roll (4) by the support rolls (8), such that forces acting on said roll (4) cancel out in a plane perpendicular to the axis of rotation (4a) of said roll (4), in particular the force-control module (16) being the force-control module (16) according to claim 4 or being a force control module independent of the force-control module (16) of claim 4.

9. The apparatus (2) according to any of the preceding claims, wherein said roll (4) and/or at least one of the calender rolls (6) comprise(s) a heater, wherein, optionally, the heater is adapted to heat the electrode stack (12) to a temperature of at least 200°C during the winding (22) of the electrode stack (12) and/or during the calendering (24) of the electrode stack (12) and/or during a simultaneous winding (2) and calendering (24) of the electrode stack (12).

10. The apparatus (2) according to any of the preceding claims,
wherein the plurality of calender rolls (6) comprises at least three calender rolls (6) and the plurality of calenders (16) comprises at least three calenders (16); and/or
wherein the calender rolls (6) from the plurality of calender rolls (6) are arranged around said roll (4) with a distance (d) between any pair of the calender rolls (6).

11. A method (20) for fabricating a jelly-roll battery, the method (20) comprising:
winding (22) an electrode stack (12) on a roll (4); and
calendering (24) the electrode stack (12) using said roll (4).

12. The method (20) according to claim 11,
wherein the winding (22) of the electrode stack (12) on said roll (4) and the calendering (24) of the electrode stack (12) using said roll (4) are performed simultaneously; and/or
wherein the method (20) uses the apparatus (2) according to any of claims 1 to 10, said roll (4) of said apparatus (2) being said roll (4) of the method (20), and the calendering of the method (20) using the plurality of calenders (16) comprised in said apparatus (2).

13. The method (20) according to any of claims 11 or 12, wherein the electrode stack (12) comprises electrodes (32, 34) and a separator (36), the separator (36) separating the electrodes (32, 34) from each other, in particular wherein the separator (36) is a solid-state separator (36) and/or wherein the separator (36) separates the electrodes (32, 34) from each other electrically and/or physically,
wherein, optionally, the electrodes (32, 34) comprise an anode (32, 34) and a cathode (32, 34).

14. The method (20) according to claim 13,
wherein the calendering is performed to reduce a porosity of at least one of the electrodes (32, 34) by at least 5% or by at least 10% or by at least 15%; and/or
wherein the calendering is performed to reduce a porosity of at least one of the electrodes (32, 34) to below 15%; and/or
wherein the calendering is performed to reduce a thickness of at least one of the electrodes (32, 34) by at least 10% or by at least 20%; and/or
wherein the calendering is performed to reduce a porosity of the separator (36) at least by a factor of 2 or at least by a factor of 3; and/or
wherein the calendering is performed to reduce a thickness of the separator (36) by at least 20% or by at least 30%; and/or
wherein the method (20) is a roll-to-roll process or is part of a roll-to-roll process.

15. The method (20) according to any of claims 11 to 14,
wherein the method further comprises packaging the wound electrode stack (10) in a housing, wherein the electrode stack is not unwound in between the winding (22) of the electrode stack (12) on said roll (4) and the packaging of the wound electrode stack (10) in the housing, and/or wherein the electrode stack is not unwound in between the calendering (24) the electrode stack (12) using said roll (4) and the packaging of the wound electrode stack (10) in the housing, in particular wherein the housing is a housing of the jelly-roll battery.
